# EUROPEAN PATENT APPLICATION

(11) **EP 4 711 177 A1**
(43) Date of publication of application: **18.03.2026**
(21) Application number: 25158296.1
(22) Date of filing: 17.02.2025
(51) Int. Cl.: B60K 37/20, B60Q 1/14, B62D 1/18, B62D 1/181, B62D 1/183, B62D 1/185, B62D 1/187

(54) **COCKPIT FOR VEHICLE**

(30) Priority: 12.09.2024 KR 20240124399
(71) Applicant: Hyundai Mobis Co., Ltd., Gangnam-gu Seoul 06141 (KR)
(72) Inventor: KIM, Seung Cheol, 16891 Yongin-si (KR)
(74) Representative: Vossius & Partner Patentanwälte Rechtsanwälte mbB

(57) **Abstract**

A cockpit (1) for a vehicle is provided. The cockpit (1) includes a steering device (100) having a shroud (1100) to cover a steering column (1000), and a multifunctional lever (1200) protruding and extending outward from the shroud (1100), a dashboard (300) having an opening (310) through which the steering device (100) passes, and a door device (400) provided in the opening (310) to open or close a space (S) between the dashboard (300) and the shroud (1100).

## Description

### CROSS-REFERENCE TO RELATED APPLICATION(S)

The present application claims priority to and the benefit under 35 USC § 119 of Korean Patent Application No. 10-2024-0124399, filed on September 12, 2024, in the Korean Intellectual Property Office, the entire disclosure of which is incorporated herein by reference in its entirety for all purposes.

### BACKGROUND

### 1. Field

The present invention relates to a cockpit for a vehicle.

### 2. Description of the Related Art

Currently, most vehicles are equipped with columns for connecting steering wheels and steering parts to steer the vehicles, and multifunctional levers for manipulating the vehicles. As autonomous vehicles have attracted attention recently, a technology for hiding the steering wheel has been studied to ensure an interior space, improve openness, and improve sense of luxury when the vehicle is in a fully autonomous driving mode.

In order to hide the steering wheel, it is possible to use a method of performing a long-tele-in operation on the column and rotating and hiding the steering wheel. However, it is difficult to hide the steering wheel because components, such as a multifunctional lever and a shroud disposed in the related art, interfere with a dashboard. Therefore, it is necessary to cope with this difficulty.

### SUMMARY

The present invention is proposed to solve these problems and aims to provide a cockpit for a vehicle, the cockpit being capable of telescopically operating a steering unit by implementing a method of avoiding components.

Technical problems of the present invention are not limited to the aforementioned technical problems, and other technical problems, which are not mentioned above, may be clearly understood by those skilled in the art from the following descriptions.

In a general aspect of the disclosure, a cockpit for a vehicle, includes: a steering device including: a shroud configured to cover a steering column; and a multifunctional lever protruding and extending outward from the shroud; a dashboard having an opening through which the steering device passes; and a door device provided in the opening and configured to open or close a space between the dashboard and the shroud.

The door device may include: a gearbox including an internal space opened toward the shroud; a door having a rotary shaft rotatably connected to the gearbox; a gear member configured to move forward or rearward in accordance with a rotation direction of the door; and an elastic member configured to elastically deform in accordance with a movement of the gear member, wherein the door switches from a closed state, in which the door extends toward the shroud, to an open state while coming into contact with the multifunctional lever in response to the steering device performing a tele-in or tele-out operation, and wherein the door is restored to the closed state by an elastic force of the elastic member in response to the multifunctional lever passing over the door.

The gear member may include: a pinion gear connected to the rotary shaft and configured to rotate; and a rack gear connected to the pinion gear and configured to move forward or rearward, wherein a connection protrusion is provided at a center of a bottom surface of the rack gear, and wherein a guide protrusion is provided on an upper surface of the rack gear.

The elastic member may include a first coil spring and a second coil spring provided below the rack gear, and the elastic member is disposed in a movement direction of the rack gear , wherein the first coil spring and the second coil spring may be spaced apart from each other with the connection protrusion interposed therebetween.

The gearbox may further include: a first groove provided in a bottom cover, which defines a bottom surface of the internal space, so that the gear member is mounted in the first groove; and a second groove recessed downward in the first groove so that the elastic member is mounted in the second groove.

The cockpit may further include: a gear cover provided in the internal space and configured to cover the first groove; and a top cover structured to face the gear cover and configured to cover the internal space to define an upper side of the internal space.

The gear cover may have a guide hole to which the guide protrusion is connected so that forward and rearward movements of the rack gear are guided.

The cockpit may further include a damper connected to the gear member and be configured to implement a damping function as the door is restored from the open state to the closed state.

The cockpit may further include a frame to which the steering device is connected to perform a telescopic operation.

The door device may be provided at each of two opposite left and right sides of the shroud.

In another general embodiment of the disclosure, a cockpit for a vehicle, includes: a steering device including a shroud configured to cover a steering column, and a multifunctional lever protruding and extending outward from the shroud; a dashboard including an opening through which the steering device passes; a door device provided in the opening and configured to open or close a space between the dashboard and the shroud; and a controller configured to, in response to the steering device being moved to a first position, control the door device to close the space, and in response to the steering device being moved to a second position, control the door device to open the space and prevent interference with the multifunctional lever.

The cockpit may further include a sensor for sensing the position of the steering device.

The door device may further include: a gearbox including an internal space opened toward the shroud; a door having a rotary shaft rotatably connected to the gearbox; a gear member configured to move forward or rearward in accordance with a rotation direction of the door; and an elastic member configured to elastically deform in accordance with a movement of the gear member, wherein the door switches from a closed state, in which the door extends toward the shroud, to an open state while coming into contact with the multifunctional lever in response to the steering device performing a tele-in or tele-out operation, and wherein the door is restored to the closed state by an elastic force of the elastic member in response to the multifunctional lever passing over the door.

The cockpit may further include a damper connected to the gear member and configured to implement a damping function as the door is restored from the open state to the closed state.

The cockpit may further include a frame to which the steering device is connected to perform a telescopic operation.

The door device may be provided at each of two opposite left and right sides of the shroud.

### BRIEF DESCRIPTION OF THE DRAWINGS

FIG. 1 is a perspective view illustrating a cockpit according to an embodiment of the present invention.
FIG. 2 is a top plan view illustrating a steering unit and a dashboard in the cockpit in FIG. 1.
FIG. 3 is a view illustrating a state in which a shroud of the steering unit and a door unit are installed on a frame.
FIG. 4 is a view illustrating the shroud.
FIG. 5 is a view illustrating a configuration of the door unit.
FIG. 6 is a view illustrating a state in which a rack gear of a gear member and elastic members are disposed in a first groove and a second groove of a gearbox.
FIGS. 7 to 11 are views illustrating an operation of the door unit in accordance with a telescopic operation of the steering unit.
FIG. 12 is a view illustrating a configuration of a door unit according to another embodiment.
FIGS. 13A and 13B are views illustrating one surface and the other surface of a door.
FIG. 14 is a view illustrating a first torsion spring and a first spring housing connected to the door in a first mounting groove of a bottom cover.
FIG. 15 is a view illustrating a second torsion spring and a second spring housing connected to the door in a second mounting groove of a top cover.

Throughout the drawings and the detailed description, unless otherwise described or provided, the same, or like, drawing reference numerals may be understood to refer to the same, or like, elements, features, and structures. The drawings may not be to scale, and the relative size, proportions, and depiction of elements in the drawings may be exaggerated for clarity, illustration, and convenience.

### DETAILED DESCRIPTION

The following detailed description is provided to assist the reader in gaining a comprehensive understanding of the methods, apparatuses, and/or systems described herein. However, various changes, modifications, and equivalents of the methods, apparatuses, and/or systems described herein will be apparent after an understanding of the disclosure of this application. For example, the sequences of operations described herein are merely examples, and are not limited to those set forth herein, but may be changed as will be apparent after an understanding of the disclosure of this application, with the exception of operations necessarily occurring in a certain order.

The features described herein may be embodied in different forms and are not to be construed as being limited to the examples described herein. Rather, the examples described herein have been provided merely to illustrate some of the many possible ways of implementing the methods, apparatuses, and/or systems described herein that will be apparent after an understanding of the disclosure of this application.

Throughout the specification, when a component or element is described as being "on", "connected to," "coupled to," or "joined to" another component, element, or layer it may be directly (e.g., in contact with the other component, element, or layer) "on", "connected to," "coupled to," or "joined to" the other component, element, or layer or there may reasonably be one or more other components, elements, layers intervening therebetween. When a component, element, or layer is described as being "directly on", "directly connected to," "directly coupled to," or "directly joined" to another component, element, or layer there can be no other components, elements, or layers intervening therebetween. Likewise, expressions, for example, "between" and "immediately between" and "adjacent to" and "immediately adjacent to" may also be construed as described in the foregoing.

Advantages and features of the present disclosure and methods of achieving the advantages and features will be clear with reference to embodiments described in detail below together with the accompanying drawings. However, the present disclosure is not limited to the embodiments disclosed herein but will be implemented in various forms. The embodiments of the present disclosure are provided so that the present disclosure is completely disclosed, and a person with ordinary skill in the art can fully understand the scope of the present disclosure. The present disclosure will be defined only by the scope of the appended claims. Meanwhile, the terms used in the present specification are for explaining the embodiments, not for limiting the present disclosure.

Terms, such as first, second, A, B, (a), (b) or the like, may be used herein to describe components. Each of these terminologies is not used to define an essence, order or sequence of a corresponding component but used merely to distinguish the corresponding component from other component(s). For example, a first component may be referred to as a second component, and similarly the second component may also be referred to as the first component.

Throughout the specification, when a component is described as being "connected to," or "coupled to" another component, it may be directly "connected to," or "coupled to" the other component, or there may be one or more other components intervening therebetween. In contrast, when an element is described as being "directly connected to," or "directly coupled to" another element, there can be no other elements intervening therebetween.

In a description of the embodiment, in a case in which any one element is described as being formed on or under another element, such a description includes both a case in which the two elements are formed in direct contact with each other and a case in which the two elements are in indirect contact with each other with one or more other elements interposed between the two elements. In addition, when one element is described as being formed on or under another element, such a description may include a case in which the one element is formed at an upper side or a lower side with respect to another element.

The singular forms "a", "an", and "the" are intended to include the plural forms as well, unless the context clearly indicates otherwise. It will be further understood that the terms "comprises/comprising" and/or "includes/including" when used herein, specify the presence of stated features, integers, steps, operations, elements, and/or components, but do not preclude the presence or addition of one or more other features, integers, steps, operations, elements, components and/or groups thereof.

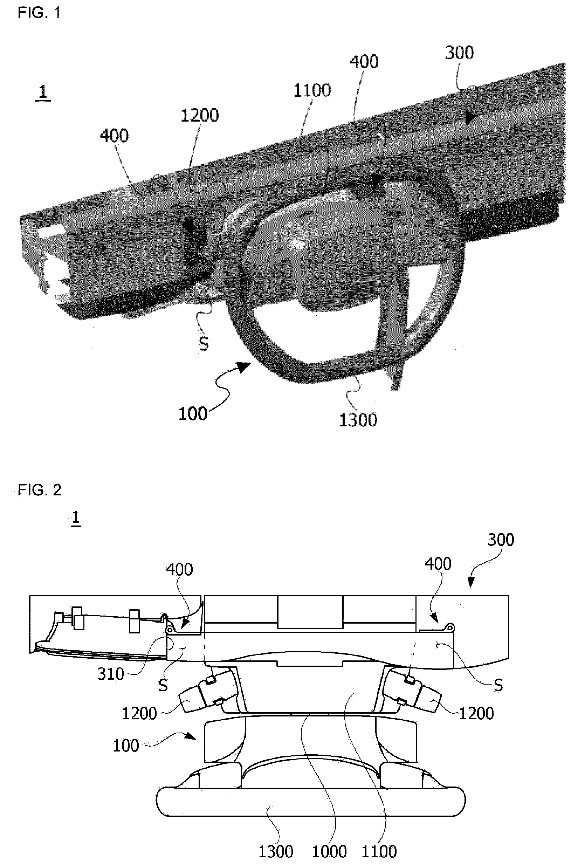

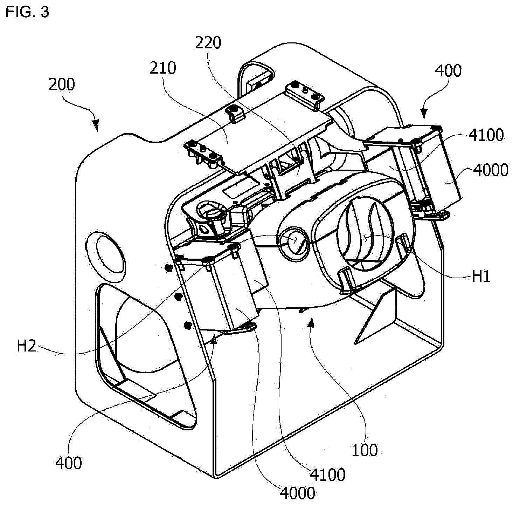

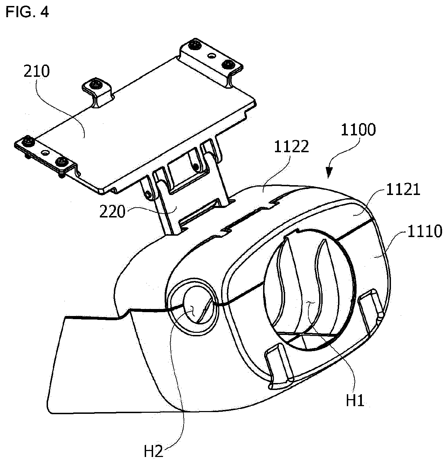

FIGS. 1 to 7 illustrate a cockpit for a vehicle according to an embodiment of the present invention and configurations.

With reference to the drawings, a cockpit 1 for a vehicle according to the embodiment of the present invention may include a steering unit 100, a frame 200, a dashboard 300, and door units 400.

The steering unit 100 may include a shroud 1100 configured to cover a steering column 1000, and multifunctional levers 1200 protruding and extending outward from the shroud 1100. A steering wheel 1300 may be connected to the steering column 1000.

The steering unit 100 allows a driver to manipulate the vehicle at a normal position P1. In an autonomous driving mode, the steering unit 100 may move to an accommodation position P2 to ensure the interior space. That is, the steering unit 100 is extended or contracted between the normal position P1 and the accommodation position P2 by a telescopic operation, and the steering wheel 1300 is hidden at the accommodation position P2, such that the interior space may be ensured, and the openness may be improved. The telescopic operation may include a tele-in operation of moving the steering wheel 1300 forward toward an engine room by moving the shroud 1100, together with the steering column 1000, in a forward/rearward direction of the vehicle, and a tele-out operation of moving the steering wheel 1300 rearward toward a driver.

The shroud 1100 may include a lower part 1110 and an upper part 1120 coupled to each other, and the upper part 1120 may include a first upper part 1121 and a second upper part 1122. The first upper part 1121 may be coupled to the lower part 1110 and define, together with the lower part 1110, a column hole H1 and lever holes H2 through which the steering column 1000 and the multifunctional levers 1200 pass, respectively. The second upper part 1122 may be rotatably connected to the first upper part 1121.

The frame 200 may support the steering unit 100 and the door units 400.

The steering unit 100 may be connected to the frame 200 so that the steering unit 100 may perform the telescopic operation. Specifically, in a state in which one side of the second upper part 1122 of the shroud 1100 is rotatably connected to the first upper part 1121, the other side of the second upper part 1122 may be rotatably connected, by means of a connection link 220, to a hinge plate 210 fixed to the frame 200.

The frame 200 may be disposed in a space between the dashboard 300 and the engine room and may not be exposed to the inside of the occupant compartment.

An opening 310 may be formed in the dashboard 300, and the steering unit 100 may pass through the opening 310. The shroud 1100 of the steering unit 100 may be disposed as a structure passing through the opening 310.

Spaces S may be provided to correspond to an interval between an edge of the opening 310 and the shroud 1100. The space S may be formed to have a size to a degree to which the multifunctional lever 1200 protruding from the shroud 1100 passes through the opening 310 and does not interfere with the dashboard 300 when the steering unit 100 performs the telescopic operation. That is, the spaces S may be provided at two opposite left and right sides of the shroud 1100 in which the multifunctional levers 1200 are provided. The space S may have a size larger than a protruding length of the multifunctional lever 1200 protruding from the shroud 1100.

The door units 400 may be provided at two opposite left and right sides of the shroud 1100, disposed in the opening 310, and configured to open or close the spaces S between the dashboard 300 and the shroud 1100. That is, because the inside of the dashboard 300 is exposed through the spaces S, there is a likelihood that the design quality deteriorates, and external foreign substances are easily introduced and damage the vehicle.

The door unit 400 is kept in a closed state in default. When the steering unit 100 performs a tele-in operation or a tele-out operation, the door unit 400 is rotated by a pushing force of the multifunctional lever 1200, such that the door unit 400 may switch to an open state.

With reference to the drawings, the door unit 400 may include a gearbox 4000, a door 4100, a gear member 4200, and an elastic member 4300. In addition, the door unit 400 may further include a damper 4400.

The gearbox 4000 may be fixed to the frame 200 and have an internal space IS.

The gearbox 4000 may have a first groove 4011 and a second groove 4012 provided in a bottom cover 4010 that defines a bottom surface of the internal space IS. The gear member 4200 may be mounted in the first groove 4011. The second groove 4012 may be recessed downward in the first groove 4011, and the elastic member 4300 may be mounted in the second groove 4012.

In addition, the gearbox 4000 may include a gear cover 4020 disposed in the internal space IS and configured to cover the first groove 4011, and a top cover 4030 structured to face the gear cover 4020 and configured to cover the internal space IS to define an upper side of the internal space IS. Therefore, the internal space IS may have a structure opened toward the shroud 1100.

A rotary shaft 4110 of the door 4100 may be rotatably connected to the gearbox 4000. In the embodiment, the door 4100 may have an approximately rectangular shape, and the rotary shaft 4110 may be provided at one end of the door 4100 and connected to the top cover 4030.

The door 4100 is configured to switch from the closed state, in which the door 4100 extends toward the shroud 1100, to the open state while coming into contact with the multifunctional lever 1200 during the tele-in or tele-out operation of the steering unit 100. The door 4100 is configured to be returned to the closed state by an elastic force of the elastic member 4300 when the multifunctional lever 1200 passes over the door 4100.

The gear member 4200 may be configured to move forward or rearward in accordance with a rotation direction of the door 4100.

The gear member 4200 may include a pinion gear 4210 and a rack gear 4220 gear-connected to each other.

The pinion gear 4210 may be connected to the rotary shaft 4110 of the door 4100 and rotate. One side of the rack gear 4220 may be gear-connected to the pinion gear 4210, such that the rack gear 4220 may move forward or rearward in accordance with the rotation of the pinion gear 4210.

The pinion gear 4210 and the rack gear 4220 may be mounted in the first groove 4011. Further, the gear cover 4020, which covers the first groove 4011, may prevent the pinion gear 4210 and the rack gear 4220 from being withdrawn to the outside of the first groove 4011.

A connection protrusion 4221 may be provided at a center of a bottom surface of the rack gear 4220, and a guide protrusion 4222 may be provided on an upper surface of the rack gear 4220.

The connection protrusion 4221 may be disposed in the second groove 4012 and connected to the elastic member 4300. The guide protrusion 4222 may be connected to a guide hole 4021 provided in the gear cover 4020 and guide the forward and rearward movements of the rack gear 4220. The guide hole 4021 may be provided in a straight slit shape extending in the movement direction of the rack gear 4220. The guide protrusion 4222 may guide a rectilinear movement of the rack gear 4220 in conjunction with the guide hole 4021 and restrict a movement range of the rack gear 4220.

The elastic member 4300 may be mounted in the second groove 4012 and configured to generate an elastic force while being elastically deformed by the movement of the gear member 4200.

The elastic member 4300 may include a first coil spring 4310 and a second coil spring 4320 provided below the rack gear 4220 and disposed in the movement direction of the rack gear 4220.

The first coil spring 4310 and the second coil spring 4320 may be provided in the second groove 4012 and spaced apart from each other with the connection protrusion 4221 interposed therebetween. That is, one side of the connection protrusion 4221 may be connected to the first coil spring 4310, and the other side of the connection protrusion 4221 may be connected to the second coil spring 4320.

In the present embodiment, an example is described in which the second groove 4012 has a hole structure formed through the bottom cover 4010, and a spring cover 4040 is coupled to the bottom cover 4010 and covers a lower side of the second groove 4012. However, the present invention is not limited thereto. That is, the second groove 4012 may have a structure that is not formed through the bottom cover 4010.

The first coil spring 4310 and the second coil spring 4320 may be easily replaced by attaching or detaching the spring cover 4040. For example, the elastic member may be replaced with another elastic member having an elastic modulus different from that of the previous elastic member, or a damaged elastic member may be easily replaced with a new elastic member.

In the embodiment, when the rack gear 4220 moves rearward, the first coil spring 4310 may be compressed, and the second coil spring 4320 may be extended, such that an elastic force may be generated to move the rack gear 4220 forward. In addition, when the rack gear 4220 moves forward, the first coil spring 4310 may be extended, and the second coil spring 4320 may be compressed, such that an elastic force may be generated to move the rack gear 4220 rearward.

The elastic force may be applied as power that moves the rack gear 4220 back to an original position and restores the door 4100 from the open state to the closed state by rotating the pinion gear 4210 in accordance with the movement of the rack gear 4220.

Meanwhile, the damper 4400 may be provided in the first groove 4011 and connected to the gear member 4200. Specifically, one side of the damper 4400 may be gear-connected to the other side of the rack gear 4220 connected to the pinion gear 4210.

The damper 4400 may be configured to implement a damping function during a process in which the door 4100 is restored from the open state to the closed state. That is, when the rack gear 4220 is restored to the original position by the elastic force generated by the elastic member 4300, the rack gear 4220 may slowly move without quickly moving so that the door 4100 is slowly closed.

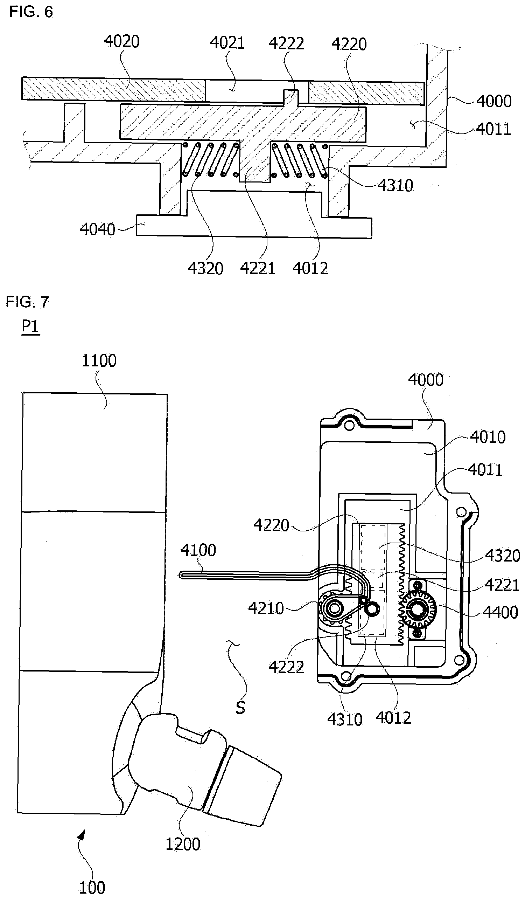

FIGS. 7 to 11 illustrate an operation of the door unit 400 according to the telescopic operation of the steering unit 100. An operation of the door unit 400 will be described with reference to FIGS. 7 to 11.

FIG. 7 illustrates a state in which the steering unit 100 is positioned at the normal position P1.

With reference to the drawings, in the state in which the steering unit 100 is positioned at the normal position P1, the door 4100 may block the space S while being kept in the closed state. Because the door 4100 does not move, the elastic member 4300 does not generate an elastic force while being kept in the original state.

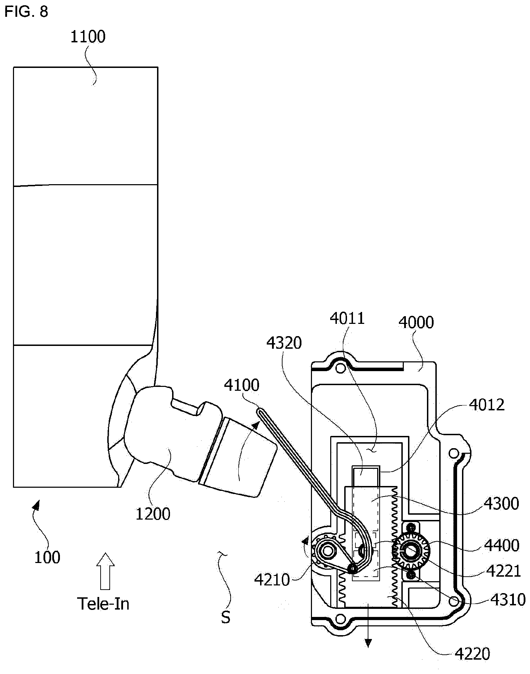

FIG. 8 illustrates a state in which the steering unit 100 moves to the accommodation position P2.

With reference to the drawings, when the steering unit 100 performs the tele-in operation and partially moves forward toward the engine room (e.g., 100 mm tele-in), the door 4100, which is in contact with the multifunctional lever 1200, rotates forward (e.g., clockwise) while being pushed by the multifunctional lever 1200. When the pinion gear 4210 rotates forward together with the door 4100, the rack gear 4220 moves rearward, and the first coil spring 4310 and the second coil spring 4320 generate elastic forces while being respectively deformed to be compressed and extended.

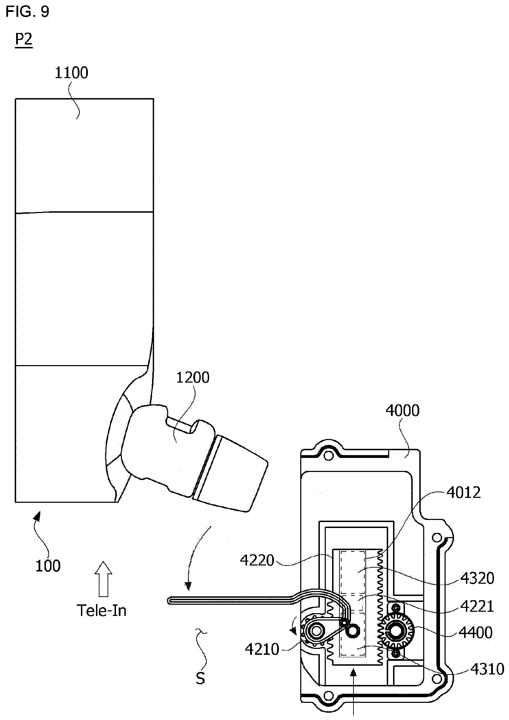

FIG. 9 illustrates a state in which the steering unit 100 is positioned at the accommodation position P2.

With reference to the drawings, when the steering unit 100 performs the tele-in operation, moves forward, and is positioned at the accommodation position P2 (e.g., 150 mm tele-in), the force for allowing the multifunctional lever 1200 to push the door 4100 is eliminated. Therefore, the first coil spring 4310 and the second coil spring 4320 are respectively restored to the original states, and the rack gear 4220 is moved forward and restored back to the original position by the elastic force. The pinion gear 4210 connected to the rack gear 4220 rotates rearward (e.g., counterclockwise), and the door 4100 switches from the open state back to the closed state and blocks the space S.

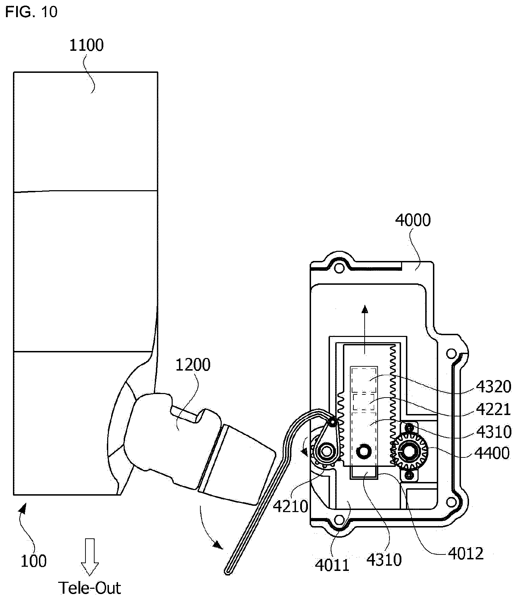

FIG. 10 illustrates a state in which the steering unit 100 moves to the normal position P1.

With reference to the drawings, when the steering unit 100 performs the tele-out operation and moves rearward toward the inside of the occupant compartment (e.g., 120 mm tele-out), the door 4100, which is in contact with the multifunctional lever 1200, rotates rearward (e.g., counterclockwise) while being pushed by the multifunctional lever 1200. When the pinion gear 4210 rotates rearward together with the door 4100, the rack gear 4220 moves forward, and the first coil spring 4310 and the second coil spring 4320 generate elastic forces while being respectively deformed to be extended and compressed.

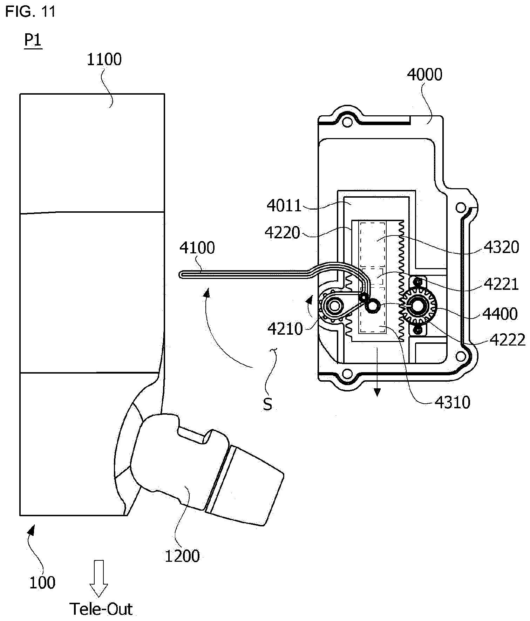

FIG. 11 illustrates a state in which the steering unit 100 is positioned at the normal position P1.

With reference to the drawings, when the steering unit 100 performs the tele-out operation and is positioned at the normal position P1 (e.g., 150 mm tele-out), the force for allowing the multifunctional lever 1200 to push the door 4100 is eliminated. Therefore, the first coil spring 4310 and the second coil spring 4320 are respectively restored to the original states, and the rack gear 4100 is moved rearward and restored back to the original position by the elastic force. The pinion gear 4210 connected to the rack gear 4220 rotates forward (e.g., clockwise), and the door 4100 switches from the open state back to the closed state and blocks the space S.

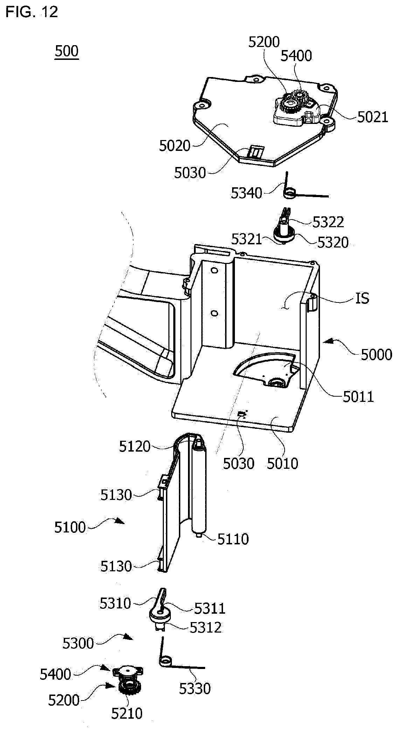

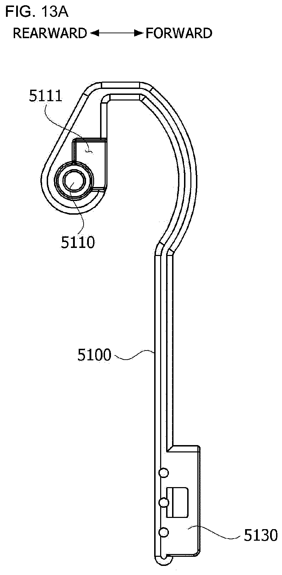

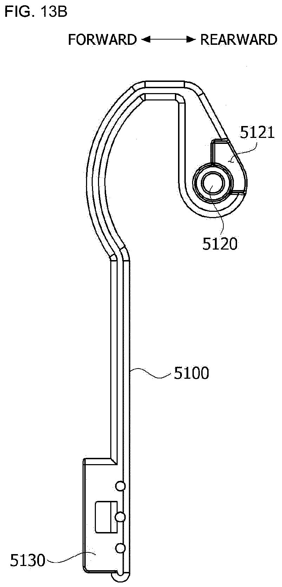

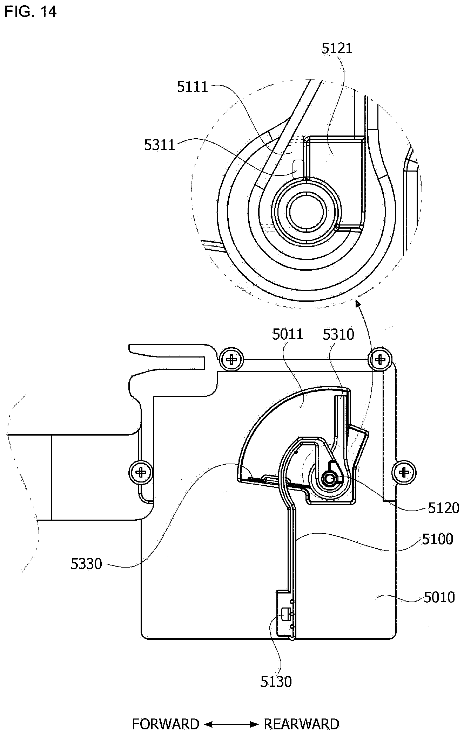

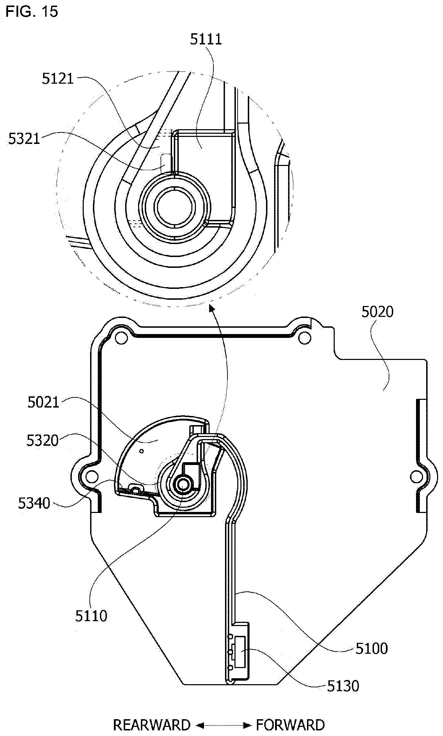

FIGS. 12 to 15 illustrate another embodiment of a door unit 500.

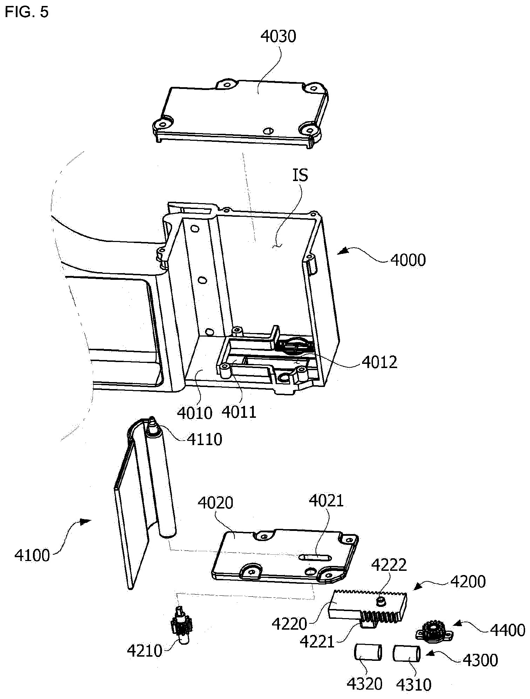

The door unit 500 according to the embodiment illustrated in FIGS. 12 to 15 differs from the door unit 400 according to the embodiment illustrated in FIG. 5 in terms of configurations of a gear member 5200 and an elastic member 5300. Hereinafter, the description will be focused on the difference.

With reference to FIGS. 12 to 15, the door unit 500 may include a gearbox 5000, a door 5100, the gear member 5200, and the elastic member 5300. In addition, the door unit 500 may further include a damper 5400.

The gearbox 5000 may be fixed to the frame 200 and have an internal space IS.

The gearbox 5000 may have a first mounting groove 5011 provided in a bottom cover 5010 that defines a bottom surface of the internal space IS, and the elastic member 5300 may be mounted in the first mounting groove 5011.

In addition, the gearbox 5000 may include a top cover 5020 structured to face the bottom cover 5010 and configured to cover the internal space IS to define an upper side of the internal space IS. Therefore, the internal space IS may have a structure opened toward the shroud 1100.

A second mounting groove 5021 may be provided in the top cover 5020 and disposed and structured to face the first mounting groove 5011. The elastic member 5300 may be mounted in the second mounting groove 5021.

The bottom cover 5010 and the top cover 5020 may each have a magnet 5030. The magnet 5030 may be disposed outside the internal space IS and correspond to the position at which the door 5100 is in the closed state.

Rotary shafts 5110 and 5120 of the door 5100 may be rotatably connected to the gearbox 5000. In the embodiment, the door 5100 may have an approximately rectangular shape, and a first rotary shaft 5110 and a second rotary shaft 5120, which are respectively connected to the bottom cover 5010 and the top cover 5020, may be provided at one end of the door 5100.

In addition, the door 5100 may have a first catching groove 5111 provided in one surface from which the first rotary shaft 5110 protrudes, and a second catching groove 5121 provided in the other surface from which the second rotary shaft 5120 protrudes. In this case, one surface of the door 5100 may correspond to a surface facing the bottom cover 5010, and the other surface of the door 5100 may correspond to a surface facing the top cover 5020.

The first catching groove 5111 and the second catching groove 5121 may be structured to be opened in opposite directions. For example, the first catching groove 5111 is opened forward in the tele-in operation direction, and the second catching groove 5121 is opened rearward in the tele-out operation direction.

A magnet 5130 may be attached to the other end of the door 5100. The magnet 5130 may be disposed adjacent to the bottom cover 5010 and the top cover 5020.

The magnet 5130 provided on the door 5100 may be configured to have the same polarity as the magnets 5030 provided on the bottom cover 5010 and the top cover 5020. Therefore, even though an external force such as vibration of the vehicle is applied, the door 5100 may be stably kept in the closed state by a magnetic force generated between the magnets 5030 and 5130 without swaying in the closed state.

The elastic member 5300 may include a first spring housing 5310 and a second spring housing 5320 to which the first rotary shaft 5110 and the second rotary shaft 5120 of the door 5100 are respectively connected, and a first torsion spring 5330 and a second torsion spring 5340 connected to the first spring housing 5310 and the second spring housing 5320.

The first spring housing 5310 may have a first rotation protrusion 5311 provided on a surface that adjoins one surface of the door 5100, and the second spring housing 5320 may have a second rotation protrusion 5321 that adjoins the other surface of the door 5100. The first rotation protrusion 5311 and the second rotation protrusion 5321 may be respectively connected to the first catching groove 5111 and the second catching groove 5121.

The first spring housing 5310 may have a first connection shaft 5312 extending in a direction opposite to the first rotation protrusion 5311, and the first connection shaft 5312 may be connected to the first mounting groove 5011 while penetrating the bottom cover 5010. In addition, the second spring housing 5320 may have a second connection shaft 5322 extending in a direction opposite to the second rotation protrusion 5321, and the second connection shaft 5322 may be connected to the second mounting groove 5021 while penetrating the top cover 5020.

In a state in which a winding portion of the first torsion spring 5330 is connected to the first connection shaft 5312, one side of the first torsion spring 5330 may be connected to the first spring housing 5310, and the other side of the first torsion spring 5330 may be fixed to the first mounting groove 5011. In addition, in a state in which a winding portion of the second torsion spring 5340 is connected to the second connection shaft 5322, one side of the second torsion spring 5340 may be connected to the second spring housing 5320, and the other side of the second torsion spring 5340 may be fixed to the second mounting groove 5021.

When the door 5100 is rotated forward by the tele-in operation of the steering unit 100, the first spring housing 5310 does not rotate, and the second spring housing 5320 rotates together with the door 5100 as the second rotation protrusion 5321 is caught by the second catching groove 5121.

The second torsion spring 5340 connected to the second spring housing 5320 generates an elastic force applied in a direction opposite to a rotation direction of the second spring housing 5320. Therefore, the door 5100 switches to the open state while being rotated by a pushing force of the multifunctional lever 1200. When the pushing force of the multifunctional lever 1200 is eliminated, the door 5100 is restored back to the closed state by the elastic force of the second torsion spring 5340.

When the door 5100 is rotated rearward by the tele-out operation of the steering unit 100, the second spring housing 5320 does not rotate, and the first spring housing 5310 rotates together with the door 5100 as the first rotation protrusion 5311 is caught by the first catching groove 5111.

The first torsion spring 5330 connected to the first spring housing 5310 generates an elastic force applied in a direction opposite to a rotation direction of the first spring housing 5310. Therefore, the door 5100 switches to the open state while being rotated by the pushing force of the multifunctional lever 1200. When the pushing force of the multifunctional lever 1200 is eliminated, the door 5100 is restored back to the closed state by the elastic force of the first torsion spring 5330.

Because the first catching groove 5111 and the second catching groove 5121 are structured to be opened in the opposite directions as described above, the first spring housing 5310 generates the elastic force in conjunction with the first torsion spring 5330 while rotating during the tele-out operation, and the second spring housing 5320 generates the elastic force in conjunction with the second torsion spring 5340 while rotating during the tele-in operation. Therefore, the door 5100 may automatically switch from the open state to the closed state.

The gear member 5200 may include a pinion gear 5210 disposed outside the internal space IS and connected to the first connection shaft 5312 and the second connection shaft 5322. The pinion gear 5210 may be gear-connected to the damper 5400.

As described above, according to the embodiment of the present invention, the door 4100 or 5100, which is configured to block the space S between the steering unit 100 and the opening 310 of the dashboard 300, is configured to be opened by the pushing force of the multifunctional lever 1200 and then automatically closed by the elastic force of the elastic member, such that a stable telescopic operation of the steering unit 100 may be performed.

Therefore, the overall structure and configuration may be simplified in comparison with the structure in the related art in which the multifunctional lever and the steering wheel are folded to prevent interference with the dashboard.

The embodiment of the present invention may provide the cockpit for a vehicle, the cockpit being capable of telescopically operating the steering unit by implementing the method of avoiding the components.

The effects of the present invention are not limited to the aforementioned effects, and other effects, which are not mentioned above, will be clearly understood by those skilled in the art from the claims.

A number of embodiments have been described above. Nevertheless, it will be understood that various modifications may be made. For example, suitable results may be achieved if the described techniques are performed in a different order and/or if components in a described system, architecture, device, or circuit are combined in a different manner and/or replaced or supplemented by other components or their equivalents. Accordingly, other implementations are within the scope of the following claims. For instance, a controller (e.g., a processor) may be configured to, in response to the steering unit 100 being moved to a first position (e.g., position P1), control the door unit 100 to close (or block) the space, and in response to the steering unit 100 being moved to a second position (e.g., position P2), control the door unit 100 to open the space between the dashboard 300 and the shroud 1100 and prevent interference with the multifunctional lever 1200. The cockpit 1 may further include a sensor for sensing the position (e.g., P1 or P2) of the steering unit 100.

While this disclosure includes specific examples, it will be apparent after an understanding of the disclosure of this application that various changes in form and details may be made in these examples without departing from the spirit and scope of the claims and their equivalents. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components or their equivalents. Therefore, the scope of the disclosure is defined not by the detailed description, but by the claims and their equivalents, and all variations within the scope of the claims and their equivalents are to be construed as being included in the disclosure.

## Claims

1. A cockpit for a vehicle, the cockpit comprising:
a steering device comprising:
a shroud configured to cover a steering column; and
a multifunctional lever protruding and extending outward from the shroud;
a dashboard having an opening through which the steering device passes; and
a door device provided in the opening and configured to open or close a space between the dashboard and the shroud.

2. The cockpit of claim 1, wherein the door device comprises:
a gearbox including an internal space opened toward the shroud;
a door having a rotary shaft rotatably connected to the gearbox;
a gear member configured to move forward or rearward in accordance with a rotation direction of the door; and
an elastic member configured to elastically deform in accordance with a movement of the gear member,
wherein the door switches from a closed state, in which the door extends toward the shroud, to an open state while coming into contact with the multifunctional lever in response to the steering device performing a tele-in or tele-out operation, and
wherein the door is restored to the closed state by an elastic force of the elastic member in response to the multifunctional lever passing over the door.

3. The cockpit of claim 2, wherein the gear member comprises:
a pinion gear connected to the rotary shaft and configured to rotate; and
a rack gear connected to the pinion gear and configured to move forward or rearward,
wherein a connection protrusion is provided at a center of a bottom surface of the rack gear, and
wherein a guide protrusion is provided on an upper surface of the rack gear.

4. The cockpit of claim 3, wherein the elastic member comprises a first coil spring and a second coil spring provided below the rack gear, and the elastic member is disposed in a movement direction of the rack gear, and
wherein the first coil spring and the second coil spring are spaced apart from each other with the connection protrusion interposed therebetween.

5. The cockpit of claim 3 or 4, wherein the gearbox further includes:
a first groove provided in a bottom cover, which defines a bottom surface of the internal space, so that the gear member is mounted in the first groove; and
a second groove recessed downward in the first groove so that the elastic member is mounted in the second groove.

6. The cockpit of claim 5, further comprising:
a gear cover provided in the internal space and configured to cover the first groove; and
a top cover structured to face the gear cover and configured to cover the internal space to define an upper side of the internal space.

7. The cockpit of claim 6, wherein the gear cover has a guide hole to which the guide protrusion is connected so that forward and rearward movements of the rack gear are guided.

8. The cockpit of any one of claims 2 to 7, further comprising:
a damper connected to the gear member and configured to implement a damping function as the door is restored from the open state to the closed state.

9. The cockpit of any one of claims 1 to 8, further comprising:
a frame to which the steering device is connected to perform a telescopic operation.

10. The cockpit of any one of claims 1 to 9, wherein the door device is provided at each of two opposite left and right sides of the shroud.

11. The cockpit of any of claims 1 to 10, further comprising:
a controller configured to:
in response to the steering device being moved to a first position, control the door device to close the space, and
in response to the steering device being moved to a second position, control the door device to open the space and prevent interference with the multifunctional lever.

12. The cockpit of claim 11, further comprising:
a sensor for sensing the position of the steering device.
